# FASCICULE DE BREVET EUROPEEN

(11) **EP 2 323 894 B1**
(45) Date de publication et mention de la délivrance du brevet: **02.01.2013**
(21) Numéro de dépôt: 09741383.5
(22) Date de dépôt: 08.09.2009
(51) Int. Cl.: B62D 65/10, B62D 29/00, B62D 65/06, B62D 25/10, B29C 65/02, B29C 45/46

(54) **PROCEDE D'ASSEMBLAGE D'UN CAPOT DE VEHICULE**
VERFAHREN ZUM MONTIEREN EINER FAHRZEUGHAUBE
METHOD FOR ASSEMBLING A VEHICLE BONNET

(30) Priorité: 10.09.2008 FR 0856079
(43) Date de publication de la demande: 25.05.2011
(73) Titulaire: Compagnie Plastic Omnium, 69007 Lyon (FR)
(72) Inventeur: ROCHEBLAVE, Laurent, F-69100 Villeurbanne (FR); MARTIN, Laurent, F-07340 Peaugres (FR); DESBOIS, Brice, 69500 BRON (FR); GARBOUD, Lilian, F-01150 Lagnieu (FR); PONSONNET, Rémy, F-26600 Mercurol (FR)
(74) Mandataire: Descazeaux, Charles
(86) Numéro de dépôt international: PCT/FR2009/051689
(87) Numéro de publication internationale: WO 2010/029251

(56) Documents cités:
- WO-A-03/064221
- WO-A-2008/109811
- US-A- 5 124 191

## Description

La présente invention concerne un capot de véhicule, et notamment un procédé d'assemblage d'un tel capot.

On connaît un capot comprenant une doublure et une peau de capot, toutes deux réalisées en un même matériau. La peau et la doublure sont assemblées, notamment fixées l'une par rapport à l'autre de façon définitive, en partie périphérique à l'aide d'une colle réticulable à chaud, c'est à dire qui solidifie au-delà d'une température donnée. On utilise par exemple des colles à base de résines époxy.

Le procédé d'assemblage d'un tel capot est effectué comme suit. Lors d'une première étape, la colle est appliquée dans un état pâteux (ou crû) sur l'une ou l'autre de la peau et de la doublure. Ces deux éléments du capot sont ensuite amenés l'un contre l'autre. La colle ne permet pas encore de maintenir fermement ensemble la peau et la doublure car elle n'est pas réticulée à ce stade du procédé. La peau et la doublure sont alors serties. Elles peuvent également être maintenues ensemble localement et en périphérie par des liaisons ponctuelles, notamment par soudure et/ou par clinchage, correspondant à un poinçonnage local de la peau et de la doublure.

Le capot ainsi maintenu est ensuite monté sur la caisse du véhicule, et amené avec cette dernière à la cataphorèse, qui consiste en une immersion de la caisse dans un ou plusieurs bains permettant entre autres de la protéger de la corrosion. Cette étape est suivie d'une étape d'étuvage lors de laquelle la caisse munie du capot est chauffée pour la sécher. La température de l'étuve permet également la réticulation de la colle reliant la peau et la doublure du capot.

Ainsi, dans l'état de la technique, la peau et la doublure du capot ne sont assemblées de façon définitive que lors de l'étape d'étuvage, lorsque le capot est déjà monté sur la caisse.

Un tel procédé permet une fixation mutuelle satisfaisante de la peau et de la doublure lorsqu'elles sont réalisées en un même matériau ou en deux matériaux distincts mais ayant un comportement très proche relativement à la chaleur, notamment des propriétés de dilatation thermique semblables. Toutefois, les inventeurs à la base de l'invention ont constaté qu'un tel procédé n'était pas adapté au cas d'un capot hybride, comportant une peau réalisée en un premier matériau, par exemple en aluminium, et une doublure de capot, réalisée en un deuxième matériau ayant un comportement sensiblement différent vis-à-vis de la température, par exemple en matériau plastique et en particulier en matériau thermodurcissable tel que le SMC (acronyme de Sheet Moulding Compound). Un capot de ce type est connu du document US 5.124.191.

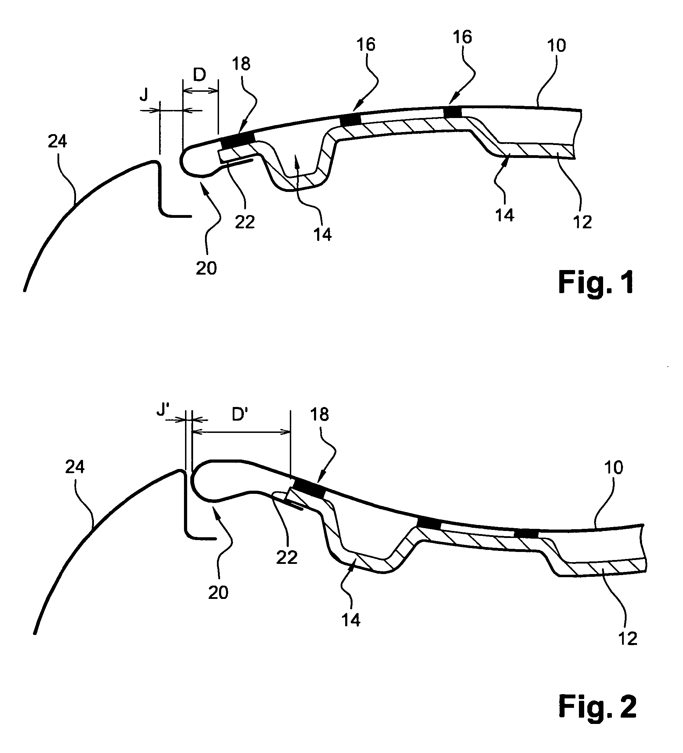

En effet, lors de l'étuvage, le capot se dilate du fait de la température importante qui règne dans l'étuve. Lorsque les deux matériaux qui composent la doublure et la peau ont un comportement similaire vis-à-vis de la température, ils se dilatent de façon semblable, ce qui permet d'immobiliser la peau et la doublure du capot l'une par rapport à l'autre, par réticulation de la colle, en respectant le positionnement relatif souhaité, et la géométrie prévue pour le capot est respectée. En revanche, comme cela est représenté à la figure 2, illustrant une coupe transversale d'un capot en état dilaté, lorsque la peau se dilate plus que la doublure, il en résulte une déformation du capot. En effet, lors de l'étape d'étuvage, les extrémités de la doublure 22 et de la peau 20 n'étant pas encore reliées fermement par la colle 18, elles glissent les unes par rapport aux autres de sorte que le jeu D' entre les extrémités 20, 22 de la peau et de la doublure dilatée est différent du jeu théorique D initialement prévu (représentée sur la figure 1). Une déformation se produit également lorsque la doublure se dilate plus que la peau.

La colle réticulant lors de l'étape d'étuvage, la doublure et la peau sont immobilisées l'une par rapport à l'autre avec un mauvais positionnement relatif, ce qui conduit après refroidissement à des déformations permanentes, la doublure et la peau étant fixées lorsqu'elle présentent l'une par rapport à l'autre un jeu D' différent du jeu théorique D. Les jeux J' entre une aile 24 du véhicule et le capot peuvent de ce fait être différents des jeux J initialement prévus (représentés sur la figure 1).

Un procédé d' assemblage d'un capot selon le préambule de la revendication 1 est connu du WO-A-03/64221.

L'invention vise à améliorer la géométrie de l'assemblage d'une peau et d'une doublure de capot réalisées en deux matériaux distincts de sorte que les jeux et affleurements du capot avec les autres éléments du véhicule, par exemple l'aile de celui-ci, sont respectés.

A cet effet, l'invention a pour objet un procédé d'assemblage d'un capot de véhicule comportant une peau réalisée en un premier matériau et une doublure réalisée en un deuxième matériau distinct du premier, le procédé comprenant les étapes suivantes:
- une étape d'application d'une colle sur la peau ou la doublure, de sorte que la colle soit placée entre la peau et la doublure lorsque le capot est assemblé,
- une étape de réticulation d'au moins une partie de la colle, distincte d'une éventuelle étape d'étuvage du capot réalisée le cas échéant suite à une immersion du capot dans un bain de cataphorèse.

La réticulation de la colle est effectuée par chauffage, mais peut être mise en oeuvre à une température moins importante que celle de l'étuve prévue pour le séchage de la caisse suite à l'immersion de celle-ci dans le bain de cataphorèse. La dilatation thermique de la doublure et de la peau est de ce fait moins importante. La dilatation différentielle de ces deux éléments est par conséquent également moindre et la déformation du capot est fortement diminuée. Il est donc possible de fixer de façon définitive la peau et la doublure dans une position proche de celle dans laquelle elles ont été positionnées l'une par rapport à l'autre lors de l'application de la colle. En outre, le chauffage n'étant pas effectué dans une étuve, il est effectué très localement, par exemple par induction au niveau du cordon de colle seulement, ce qui permet aussi de minimiser la dilatation de la peau et de la doublure. Enfin, on peut aussi utiliser des colles réticulant à température ambiante de façon à éliminer toute dilatation différentielle lors de l'étape de réticulation. Cela permet de respecter au mieux la géométrie du capot, car on fait réticuler la colle entre la peau et la doublure à une étape de la fabrication où la dilatation différentielle entre les deux panneaux du capot est faible.

En effet, si le capot passe dans l'étuve de cataphorèse lorsque la peau et la doublure sont déjà immobilisées l'une par rapport à l'autre, la différence de dilatation entre la peau et la doublure ne se traduit plus par un glissement relatif de la peau et de la doublure mais est absorbée par une modification temporaire du galbe du capot, celui-ci reprenant sa position initiale après refroidissement. Si le capot passe dans l'étuve de cataphorèse avant que la colle soit appliquée sur la peau et/ou la doublure, les deux panneaux se dilatent et glissent librement l'un par rapport à l'autre mais reviennent dans leur position relative initiale après refroidissement de sorte que l'étape de réticulation hors étuve de cataphorèse permet d'immobiliser la peau et la doublure avec le positionnement relatif souhaité.

En outre, comme l'étape de réticulation est distincte du passage du capot dans l'étuve de cataphorèse, la tenue de l'assemblage de la peau et de la doublure est améliorée. En effet, dans l'état de la technique, une fois la colle réticulée dans l'état déformé du capot, le capot a tendance à reprendre sa forme initiale lorsqu'il refroidit. On observe alors des contraintes en cisaillement dans la colle, ce qui fragilise la liaison entre la peau et la doublure du capot. Un tel cisaillement n'intervient pas, ou à une échelle bien moindre, lorsque le procédé selon l'invention est mis en oeuvre du fait de la déformation moindre du capot, ce qui permet de consolider la fixation en position définitive de la peau et de la doublure de capot.

Ainsi, alors qu'on avait auparavant tendance à renoncer à l'utilisation de capots comprenant une peau et une doublure réalisées en des matériaux distincts en raison de la difficulté de respecter la géométrie du véhicule avec un tel capot, le procédé permet de munir un véhicule d'un capot de ce type tout en respectant la géométrie du véhicule. Un tel capot est très avantageux car il permet d'optimiser le rapport poids/coûts de fabrication du capot et répond bien au cahier des charges du capot, par exemple en ce qui concerne le traitement des chocs piéton.

Le procédé selon l'invention peut également comprendre l'une ou plusieurs des caractéristiques de la liste suivante :
- les premier et deuxième matériaux appartiennent chacun à une catégorie de matériaux distincte, choisie parmi la liste suivante :
   o un matériau métallique, tel que l'acier ou l'aluminium,
   o un matériau plastique éventuellement renforcé de fibres, notamment un matériau thermoplastique, tel que le polyamide (PA) ou le polypropylène (PP), ou un matériau thermodurcissable, tel que le SMC (Sheet Moulding Compound) ou l'AMC (Advanced Moulding Compound),
   o un assemblage de matériaux comprenant au moins un matériau plastique et un matériau métallique.
   La peau peut par exemple être réalisée en aluminium alors que la doublure est réalisée en SMC ou en polyamide. La peau peut également être réalisée en matière plastique, alors que la doublure est réalisée en un matériau hybride,
- lors de l'étape de réticulation, on chauffe localement la peau et/ou la doublure, en particulier une portion collée de la peau et/ou la doublure. On entend par « portion collée » une portion de la peau ou de la doublure superposée à la colle lorsque le capot est assemblé, même lorsque la colle n'est pas réticulée. Ici, la colle reliant les portions collées de la peau et la doublure est à l'état pâteux. Le chauffage local de la peau permet de faire réticuler la colle tout en diminuant la surface de la peau et de la doublure qui se dilatent, diminuant ainsi la dilatation différentielle de ces deux pièces et la déformation du capot.
- on chauffe la peau et/ou la doublure par induction, par effet-Joule ou avec de l'air chaud,
- la colle peut être également chauffée sans que la peau et/ou la doublure ne le soit, notamment dans le cas où le chauffage est réalisé par induction par l'intermédiaire d'une pièce métallique additionnelle, et/ou dans le cas où la colle comprend des particules métalliques réagissant à ce type de chauffage.
- on refroidit localement au moins une portion de la peau ou de la doublure distincte de sa portion collée, simultanément à l'étape de réticulation. Cela permet de compenser la légère dilatation de la peau et/ou la doublure créée localement du fait du chauffage de la portion collée et cela minimise encore la déformation du capot. On peut ainsi obtenir des jeux et affleurements optimaux du capot avec les autres éléments du véhicule, tels que l'aile de celui-ci,
- l'étape de chauffage est mise en oeuvre avant l'immersion dans le bain de cataphorèse le cas échéant et éventuellement avant qu'on monte le capot sur une caisse du véhicule. Ainsi, on peut éviter de devoir fixer provisoirement le capot et la doublure à l'aide de moyens de pré-maintien tels que des points de soudage ou de clinchage. Cela permet un gain de temps et d'outils, et engendre une diminution des coûts d'assemblage du capot. Cela permet de compenser les coûts engendrés par l'ajout d'une étape de chauffage supplémentaire dans le procédé d'assemblage du capot,
- on fait passer le capot dans une étuve suite à l'immersion de celui-ci dans le bain de cataphorèse, l'étape d'application de la colle étant mise en oeuvre suite au passage du capot dans l'étuve. Dans ce cas, il n'est pas nécessaire de se préoccuper de la température de l'étuve dans laquelle passe le capot, par exemple lorsque celui-ci est déjà monté sur la caisse. En effet, la colle n'étant pas encore appliquée entre la doublure et la peau lors du passage du capot dans l'étuve, celle-ci ne peut pas réticuler du fait de ce passage,
- l'étape de réticulation est une première étape de réticulation, lors de laquelle seulement une partie de la colle est réticulée, le procédé comprenant une deuxième étape de réticulation ultérieure,
- la deuxième étape de réticulation est une étape lors de laquelle on fait passer le capot dans l'étuve. Ainsi, on réticule tout d'abord partiellement la colle et on passe ensuite le capot dans l'étuve de cataphorèse pour permettre la réticulation totale de la colle. La première étape de réticulation est suffisante pour que la déformation du capot lors de l'étuvage soit réversible, c'est-à-dire que la peau et la doublure ne glissent pas l'une par rapport à l'autre lors du passage dans l'étuve. En outre, comme la colle est réticulée seulement partiellement lors de cette première étape, cela permet de diminuer les coûts des outils et le temps de mise en oeuvre nécessaires à cette première étape,
- la colle est à base de résine époxy ou de polyuréthane (PU), et comprend de préférence des charges électriquement conductrices. Il est particulièrement avantageux d'utiliser du polyuréthane car ce type de colle, plus souple, supporte mieux les dilatations différentielles de la peau et de la doublure, survenant par exemple durant la vie du capot ou lors du passage dans l'étuve de celui-ci, lorsque la colle a été réticulée au moins partiellement avant le passage du capot dans l'étuve. Les charges électriquement conductrices, par exemple les charges métalliques, permettent de mieux transmettre la chaleur entre la peau et la doublure et de faciliter la réticulation de la colle, notamment dans le cas où le chauffage est un chauffage local et en particulier pour l'induction,
- la peau et/ou la doublure comprend au moins un élément métallique, disposé de sorte que la colle recouvre cet élément métallique lorsque le capot est assemblé. En outre, lors du procédé selon l'invention, on applique de préférence la colle sur cet élément métallique. Cet élément métallique, par exemple une lame métallique, est ainsi situé sur le chemin de colle et permet également de mieux transmettre la chaleur entre la peau et la doublure et de faciliter ainsi la réticulation de la colle,
- on applique la colle en périphérie de la doublure ou de la peau le long d'au moins un bord de celui-ci, de préférence de façon continue, pour assurer une bonne tenue de la peau et de la doublure,

L'invention a également pour objet un capot de véhicule, comprenant:
- une peau réalisée en un premier matériau,
- une doublure réalisée en un deuxième matériau distinct du premier, la peau étant collée à la doublure à l'aide d'une colle à base de résine.

Les premier et deuxième matériaux peuvent être choisis chacun dans une catégorie distincte appartenant à la liste citée plus haut.

Optionnellement, le capot est dépourvu, au voisinage d'une portion collée, de liaisons ponctuelles de la peau et de la doublure, par exemple par soudage, clinchage (ou poinçonnage), rivetage ou encliquetage. De telles liaisons ponctuelles, formant moyens de pré-maintien du capot de l'état de la technique ne sont en effet plus nécessaire lorsqu'un mode de réalisation du procédé selon l'invention est mis en oeuvre.

L'invention sera mieux comprise à la lecture de la description qui va suivre, donnée uniquement à titre d'exemple et faite en se référant aux dessins dans lesquels :
- la figure 1 est une vue en coupe transversale d'un capot selon un mode de réalisation de l'invention,
- la figure 2 est une vue en coupe transversale du capot de la figure 1 dans un état dilaté,

On va maintenant décrire un procédé d'assemblage d'un capot selon un mode de réalisation particulier de l'invention.

Avant que le procédé soit mis en oeuvre, on dispose d'une peau 10 et d'une doublure 12 de capot, complètement indépendantes l'une de l'autre. La peau 10 est par exemple réalisée en aluminium alors que la doublure 12 est réalisée en un matériau thermodurcissable renforcé de fibres, tel que le SMC (acronyme anglais pour Sheet Moulding Compound).

La peau est essentiellement plane et suit la ligne extérieure du véhicule. La doublure 12 comporte des dépressions longitudinales 14, chacune délimitant une cavité et destinée à former un corps creux lorsque la doublure et la peau sont assemblées.

Pour assembler la peau et la doublure du capot, on met en place sur la doublure du mastic 16 en partie centrale de celle-ci, le long de chacune des dépressions longitudinales, et un trait de colle 18, qui est conformé pour s'étendre continûment sur toute la périphérie de la doublure. Le mastic 16 et la colle 18 sont appliquées sur une face de la doublure destinée à être tournée vers la peau. La colle 18 appliquée est à base de polyuréthane (PU).

On positionne ensuite la peau de capot 10 relativement à la doublure 12 et on presse celle-ci sur la doublure. On déforme alors les extrémités 20 de la peau selon la direction transversale de celle-ci de façon à les replier sous les extrémités transversales correspondantes 22 de la doublure et à sertir ainsi la doublure et la peau.

Ensuite, pour fixer ensemble de façon définitive la doublure et la peau, on chauffe localement le capot, au voisinage de sa périphérie, pour que la colle réticule et maintienne ensemble fermement la peau et la doublure. Cette étape est effectuée à l'aide d'éléments de chauffage électrique.

Durant cette étape, comme la peau, réalisée en aluminium, se dilate plus que la doublure, en matière plastique, on refroidit localement la peau à l'aide d'éléments extérieurs réfrigérés, par exemple en son centre, de sorte que la dilatation différentielle de la peau et de la doublure soit fortement atténuée.

La peau et la doublure sont alors assemblées de façon définitive dans l'état dans lequel elles ont été positionnées au départ. C'est en cet état qu'est représenté le capot de la figure 1.

Ainsi, le capot ayant la même forme que celle dans laquelle la peau et la doublure ont été positionnées, les jeux et affleurements de celui-ci avec les autres pièces du véhicule, telle que l'aile 24, sont satisfaisants lorsqu'il est monté sur le véhicule.

On notera que le capot est assemblé en position définitive avant d'être monté sur la caisse du véhicule, et de ce fait, d'être immergé dans les bains de cataphorèse et de passer à l'étuvage.

Ainsi, il n'est pas nécessaire de fixer de façon temporaire la peau et la doublure, par exemple à l'aide de points de liaison par soudure, clinchage, rivetage ou encliquetage, par exemple.

En outre, l'étuvage de la caisse, comprenant le capot, est mis en oeuvre lorsque la colle 18 est déjà réticulée et n'a pas d'influence sur la forme définitive du capot. En effet, comme le capot passe dans l'étuve de cataphorèse lorsqu'il est déjà figé, la différence de dilatation entre la peau et la doublure se traduit par une modification temporaire du galbe du capot, celui-ci reprenant sa position initiale après refroidissement.

Lors de ce passage dans l'étuve, la colle subit des contraintes, notamment en cisaillement, du fait de la dilatation différentielle de la peau et de la doublure. Toutefois, comme la colle employée est réalisée dans un matériau relativement souple, elle est apte à se déformer élastiquement, la tenue de l'assemblage étant alors conforme aux raideurs usuelles de capot suite à ce passage dans l'étuve.

On va maintenant décrire un procédé d'assemblage selon un autre mode de réalisation de l'invention. La peau 10 et la doublure 12 sont les mêmes que celles décrites précédemment.

Dans ce mode de réalisation, on positionne la peau de capot 10 relativement à la doublure 12. On fixe ensuite la peau et la doublure au moins à leur périphérie, à l'aide de points de liaison par encliquetage (non représentés sur les figures). Ce type de fixation permet un pré-maintien de la peau et de la doublure.

Le capot est ensuite monté sur la caisse et passe par la cataphorèse et l'étuvage faisant suite à celle-ci.

Le capot est alors démonté de la caisse et la peau et la doublure sont séparées, les liaisons par encliquetage étant démontables. On met ensuite en place, sur la face de la doublure 12 destinée à être tournée vers la peau, du mastic 16 en partie centrale et un trait de colle 18 s'étendant continûment sur toute sa périphérie.

On presse ensuite la peau sur la doublure et on sertit la peau et la doublure à leurs extrémités transversales 20, 22 comme cela a été précédemment décrit.
Puis, on chauffe localement le capot au niveau de sa périphérie, de façon à faire réticuler la colle 18. Cette étape est effectuée à l'aide d'un chauffage par induction de la portion collée de la peau métallique, la peau et la doublure étant maintenues sur un support. Le capot est ainsi assemblé dans sa position définitive. Il sera ensuite remonté sur la caisse du véhicule.

L'invention n'est pas bien entendu limitée aux modes de réalisation décrits.

Le procédé selon le premier mode de réalisation peut par exemple comprendre une première étape de réticulation lors de laquelle seulement une partie de la colle est réticulée et une deuxième étape de réticulation consistant en l'étape de passage du capot dans l'étuve de cataphorèse et lors de laquelle la totalité de la colle réticule. Ce procédé permet d'obtenir une géométrie satisfaisante du capot, sans pour autant augmenter considérablement le temps d'assemblage du capot, la première étape de réticulation pouvant être en effet raccourcie.

De plus, l'étape de refroidissement local du capot est par exemple optionnelle, tout comme les étapes de sertissage et d'application de mastic sur le capot. Dans le deuxième mode de réalisation du procédé, l'étape d'application du mastic pourrait également être effectuée avant le passage du capot en cataphorèse. L'étape de refroidissement pourrait également être mise en oeuvre dans le deuxième mode de réalisation du procédé.

En outre, la réticulation peut être effectué par d'autres moyens que ceux décrits, par exemple par chauffage par air chaud ou en laissant le capot reposer longuement à température ambiante. Dans le procédé selon le premier mode de réalisation, le chauffage peut être également effectué par induction, et dans le procédé selon le deuxième mode de réalisation, il peut être effectué par des éléments électriques. L'étape de chauffage par induction peut être effectuée lorsque le capot est monté sur la caisse, ce qui permet de régler la position de la peau et la doublure au plus juste, notamment pour assurer des jeux symétriques avec les ailes droite et gauche. Le chauffage par induction peut également être effectué même si la peau de capot, ou la doublure ne sont pas entièrement métalliques. Pour cela, la peau de capot ou la doublure peuvent ne comprendre qu'une zone périphérique métallique ou un logement permettant d'ajouter une pièce métallique à proximité de la colle et/ou la colle elle-même peut comprendre des charges métalliques. Dans ce cas, elle peut être chauffée sans que la peau ou la doublure ne soient chauffées de façon intermédiaire.

Les moyens de pré-maintien de la peau et la doublure ne sont pas non plus limités aux moyens décrits. Ils peuvent par exemple comprendre des moyens de liaison par rivetage, soudure ou clinchage. Dans ce cas, la peau et la doublure ne sont pas démontables, mais l'application de la colle et le sertissage sont effectués après le passage du capot en cataphorèse.

Dans le procédé selon le deuxième mode de réalisation, il est également possible de faire passer le capot dans le bain de cataphorèse sans que celui-ci ne soit monté sur la caisse, pour éviter des étapes de montage et de démontage supplémentaires.

Il est également à noter que le capot peut être collé et/ou serti sur seulement un ou deux de ses côtés et pas forcément sur toute sa périphérie. Si la colle n'est pas appliquée sur un côté du capot, du mastic peut être appliqué le long du bord de ce côté en remplacement de la colle. La colle peut également ne pas être appliquée continûment sur un côté du capot.

En outre, la colle peut être réalisée en d'autres matériaux que ceux décrits. Tout type de colle décrit peut être utilisé, que l'étape d'application de la colle soit effectuée avant ou après le montage du capot sur la caisse.

Enfin, la peau et la doublure ne sont pas limitées aux formes décrites. Elles ne sont pas non plus limitées aux matériaux décrits. La peau peut par exemple être réalisée en acier, alors que la doublure peut être réalisée en un matériau thermoplastique telle que le polyamide (PA) ou en un matériau hybride métal/plastique. La peau peut également être réalisée en matière plastique, notamment en matériau thermoplastique alors que la doublure est réalisée en matériau composite tel que le SMC ou l'AMC (acronyme d'Advanced Moulding Compound), ou en un matériau hybride métal/plastique.

## Revendications

1. Procédé d'assemblage d'un capot de véhicule, **caractérisé en ce que**, le capot comportant une peau (10) réalisée en un premier matériau et une doublure (12) réalisée en un deuxième matériau distinct du premier, le procédé comprend :
- une étape d'application d'une colle sur la peau ou la doublure, de sorte que la colle soit placée entre la peau et la doublure lorsque le capot est assemblé,
- une étape de réticulation d'au moins une partie de la colle, distincte d'une éventuelle étape d'étuvage du capot réalisée le cas échéant suite à une immersion du capot dans un bain de cataphorèse, **caractérisé en ce que** lors de l'étape de réticulation on chauffe localement la peau et/ou la doublure ou éventuellement la colle seule, en particulier une portion collée de la peau et/ou la doublure..

2. Procédé selon la revendication précédente, dans lequel les premier et deuxième matériaux appartiennent chacun à une catégorie de matériaux distincte, choisie parmi la liste suivante :
- un matériau métallique, tel que l'acier ou l'aluminium,
- un matériau plastique éventuellement renforcé de fibres, notamment un matériau thermoplastique, tel que le polyamide (PA) ou le polypropylène (PP), ou un matériau thermodurcissable, tel que le SMC (Sheet Moulding Compound) ou l'AMC (Advanced Moulding Compound),
- un assemblage de matériaux comprenant au moins un matériau plastique et un matériau métallique.

3. Procédé selon l'une quelconque des revendications précédentes, dans lequel on chauffe la peau et/ou la doublure ou éventuellement la colle seule par induction, par effet-Joule, ou avec de l'air chaud.

4. Procédé selon l'une quelconque des revendications précédentes, dans lequel on refroidit localement au moins une portion de la peau et/ou de la doublure distincte de sa portion collée, simultanément à l'étape de réticulation.

5. Procédé selon l'une quelconque des revendications précédentes, dans lequel l'étape de réticulation est mise en oeuvre avant l'immersion dans le bain de cataphorèse le cas échéant, et éventuellement avant qu'on monte le capot sur une caisse du véhicule.

6. Procédé selon l'une quelconque des revendications précédentes, dans lequel on fait passer le capot dans une étuve suite à l'immersion de celui-ci dans le bain de cataphorèse, l'étape d'application de la colle étant mise en oeuvre suite au passage du capot dans l'étuve.

7. Procédé selon l'une quelconque des revendications précédentes, dans lequel l'étape de réticulation est une première étape de réticulation, lors de laquelle seulement une partie de la colle est réticulée, le procédé comprenant une deuxième étape de réticulation ultérieure.

8. Procédé selon la revendication précédente, dans lequel la deuxième étape de réticulation est une étape lors de laquelle on fait passer le capot dans l'étuve.

9. Procédé selon l'une quelconque des revendications précédentes, dans lequel la colle (18) est à base de résine époxy ou de polyuréthane (PU), et comprend de préférence des charges électriquement conductrices, notamment métalliques.

10. Procédé selon l'une quelconque des revendications précédentes, dans lequel on applique la colle en périphérie de la doublure (12) ou de la peau (10) le long d'au moins un bord de celle-ci, de préférence de façon continue.

11. Procédé selon l'une quelconque des revendications précédentes, dans lequel la peau et/ou la doublure comprend au moins un élément métallique, disposé de sorte que la colle recouvre cet élément métallique lorsque le capot est assemblé, et dans lequel on applique de préférence la colle sur cet élément métallique.

## Claims

1. A method of assembling a vehicle hood, the method being **characterized in that** the hood comprises a skin (10) made of a first material and a lining (12) made of a second material distinct from the first, and the method comprises:
· a step of applying an adhesive to the skin or to the lining so that the adhesive is placed between the skin and the lining when the hood is assembled; and
· a step of curing at least a portion of the adhesive, distinct from an optional step of stoving the hood, which step might be performed after the hood has been immersed in a cataphoresis bath, if any;
the method being **characterized in that** during the curing step heating is applied locally to the skin, and/or to the lining, or possibly only to the adhesive, in particular to a portion stuck to the skin and/or to the lining.

2. A method according to the preceding claim, wherein the first and second materials belong to respective distinct categories of materials, selected from the following list:
· a metallic material, such as steel or aluminum;
· a plastics material that is optionally fiber-reinforced, in particular a thermoplastic material such as polyamide (PA) or polypropylene (PP), or a thermosetting material such as sheet molding compound (SMC) or advanced molding compound (AMC);
· an assembly of materials comprising at least one plastics material and at least one metallic material.

3. A method according to any preceding claim, wherein the skin, and/or the lining, or possibly only the adhesive is heated by induction, by the Joule effect, or by using hot air.

4. A method according to any preceding claim, wherein at least a portion of the skin and/or of the lining distinct from its adhesive-coated portion is cooled locally, simultaneously with the curing step.

5. A method according to any preceding claim, wherein the curing step is implemented before immersion in the cataphoresis bath, if any, and optionally before mounting the hood on a body of the vehicle.

6. A method according to any preceding claim, wherein the hood is passed through a stove after it has been immersed in the cataphoresis bath, the step of applying adhesive being implemented after the hood has passed through the stove.

7. A method according to any preceding claim, wherein the curing step is a first curing step during which only a portion of the adhesive is cured, the method including a subsequent second curing step.

8. A method according to the preceding claim, wherein the second curing step is a step during which the hood is passed through the stove.

9. A method according to any preceding claim, wherein the adhesive (18) is based on epoxy resin or on polyurethane (PU), and preferably includes an electrically-conductive filler, in particular a metallic filler.

10. A method according to any preceding claim, wherein the adhesive is applied to the periphery of the lining (12) or of the skin (10) along at least one edge thereof, and preferably in continuous manner.

11. A method according to any preceding claim, wherein the skin and/or the lining includes at least one metallic element arranged in such a manner that the adhesive covers the metallic element when the hood is assembled, and wherein the adhesive is preferably applied to the metallic element.

## Patentansprüche

1. Verfahren zum Montieren einer Fahrzeughaube, **dadurch gekennzeichnet, dass** die Haube eine Außenschicht (10) aufweist, die aus einem ersten Werkstoff hergestellt ist, und eine Innenverkleidung (12), die aus einem zweiten Werkstoff hergestellt ist, der anders ist als der erste Werkstoff, wobei das Verfahren Folgendes aufweist:
- einen Schritt des Aufbringens eines Klebstoffes auf die Außenschicht oder die Innenverkleidung, so dass der Klebstoff zwischen der Außenschicht und der Innenverkleidung platziert ist, wenn die Haube montiert wird,
- einen Schritt des Vernetzens mindestens eines Teils des Klebstoffes, der von einem eventuellen Schritt des Temperns der Haube getrennt ist, der gegebenenfalls im Anschluss an ein Eintauchen der Haube in ein Kataphoresebad ausgeführt wird, **dadurch gekennzeichnet, dass** man bei dem Schritt des Vernetzens die Außenschicht und/oder die Innenverkleidung oder eventuell nur den Klebstoff allein lokal erwärmt, insbesondere einen geklebten Teil der Außenschicht und/oder der Innenverkleidung.

2. Verfahren nach dem vorhergehenden Anspruch, bei dem der erste und der zweite Werkstoff jeweils zu einer getrennten Werkstoffkategorie gehören, die aus der folgenden Liste ausgewählt ist:
- ein metallischer Werkstoff, wie zum Beispiel Stahl oder Aluminium,
- ein Kunststoffwerkstoff, eventuell mit Fasern verstärkt, insbesondere ein Thermoplastwerkstoff, wie zum Beispiel Polyamid (PA) oder Polypropylen (PP), oder ein wärmehärtbarer Werkstoff, wie zum Beispiel SMC (Sheet Moulding Compound) oder AMC (Advanced Moulding Compound),
- einen Verbund von Werkstoffen, der mindestens einen Kunststoffwerkstoff und einen metallischen Werkstoff aufweist.

3. Verfahren nach einem der vorhergehenden Ansprüche, bei dem man die Außenschicht und/oder die Innenverkleidung oder eventuell den Klebstoff allein durch Induktion, Joule-Effekt oder mit Heißluft erwärmt.

4. Verfahren nach einem der vorhergehenden Ansprüche, bei dem man lokal mindestens einen Teil der Außenschicht und/oder der Innenverkleidung getrennt von ihrem geklebten Teil gleichzeitig bei dem Vernetzungsschritt abkühlt.

5. Verfahren nach einem der vorhergehenden Ansprüche, bei dem der Schritt des Vernetzens vor dem Eintauchen in das eventuelle Kataphoresebad umgesetzt wird und eventuell, bevor man die Haube an die Karosserie des Fahrzeugs montiert.

6. Verfahren nach einem der vorhergehenden Ansprüche, bei dem man die Haube nach ihrem Eintauchen in das Kataphoresebad einem Tempern unterzieht, wobei der Schritt des Auftragens des Klebstoffes im Anschluss die Durchführung des Temperns der Haube umgesetzt wird.

7. Verfahren nach einem der vorhergehenden Ansprüche, bei dem der Schritt des Vernetzens ein erster Vernetzungsschritt ist, bei dem nur ein Teil des Klebstoffes vernetzt wird, wobei das Verfahren einen späteren zweiten Vernetzungsschritt aufweist.

8. Verfahren nach dem vorhergehenden Anspruch, bei dem der zweite Vernetzungsschritt ein Schritt ist, bei dem man die Haube dem Tempern unterzieht.

9. Verfahren nach einem der vorhergehenden Ansprüche, bei dem der Klebstoff (18) auf Epoxidharz oder Polyurethan (PU) basiert und vorzugsweise elektrisch leitende, insbesondere metallische Füllstoffe enthält.

10. Verfahren nach einem der vorhergehenden Ansprüche, bei dem man den Klebstoff am Umfang der Innenverkleidung (12) oder der Außenschicht (10) entlang mindestens eines Rands dieser, vorzugsweise kontinuierlich aufträgt.

11. Verfahren nach einem der vorhergehenden Ansprüche, bei dem die Außenschicht und/oder die Innenverkleidung mindestens ein metallisches Element aufweist, das derart angeordnet ist, dass der Klebstoff dieses metallische Element abdeckt, wenn die Haube montiert ist, und bei dem man den Klebstoff vorzugsweise auf dieses metallische Element aufträgt.
